(19) Europäisches Patentamt
European Patent Office
Office européen des brevets

(11) **EP 0 898 417 A2**

(12) **EUROPEAN PATENT APPLICATION**

(43) Date of publication:
**24.02.1999 Bulletin 1999/08**

(51) Int Cl.$^6$: **H04N 1/60**

(21) Application number: **98306646.5**

(22) Date of filing: **19.08.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **19.08.1997 IL 12157997**

(71) Applicant: **Scitex Corporation Ltd.**
**Herzliya 46104 (IL)**

(72) Inventors:
• **Melman, Haim Zvi**
  **Kfar Saba 44335 (IL)**
• **Keydar, Moshe**
  **Holon 58347 (IL)**

(74) Representative: **Freed, Arthur Woolf et al**
**Reginald W. Barker & Co.,**
**Chancery House,**
**53-64, Chancery Lane**
**London, WC2A 1QU (GB)**

(54) **A method for multiple color space color transformation**

(57)    A method for the generation of a color transformation is provided. The method transforms a first image having a first set of ink values to a second image having a second set of ink values, the first set of ink values and the second set of ink values generally having the same set of color values. The method includes a first transformation step from the first set of ink values to a set of vector values and a second transformation step from the set of vector values to a second set of ink values. At least two different ink values of the second set of ink values generally have the same color values.

Figure 1

## Description

### FIELD OF THE INVENTION

The invention is related to the graphic arts and in particular to color transformation of digital images.

### BACKGROUND OF THE INVENTION

Color management of digital images is a major component of processing of digital images.

Color digital images are created in various forms such as scanning a transparency using a color scanner such as Smart Scanner 342 available from Scitex Corporation Ltd, Israel.

The digital image has a presentation of pixels. Each pixel contains color information in forms such as RGB (Red, Green, Blue) values or CMYK (Cyan, Magenta, Yellow, Black) values. The CMYK values represent the amount of the CMYK inks to be placed on the paper in the printing process of a specific printing device.

On many occasions, a CMYK image file which had been prepared for printing on a first printing device is re-submitted for printing on a second printing device. In order to obtain colors that are virtually the same on the second printing device as were obtained on the first printing device, it is necessary to change the CMYK values. This color transformation is done normally by means of Look Up Table (LUT) to generate the new image file with suitable CMYK values.

Such color transformations may be performed using ICC (International Color Consortium) Profiles. Profiles are LUTs in a format defined by the ICC standard: ICC Profile Format Specifications, Version 3.4, published on the Internet site at: (http://www.color.org).

For many types of Profiles the ICC standard uses a reference color space such as CIE L*a*b* (where L, a, and b (Lab) represent luminance, saturation and hue, respectively). An output Profile defines the transformation from CMYK to Lab and/or from Lab to CMYK. The Lab values are generated by a colorimetric measurement of the printed image, The Lab values represent the colors (L represents luminance) of the printed CMYK ink combinations. As a result, it is possible for two different ink combinations to have the same Lab values. For example, the ink combinations represented by

a).C=0%, M=0%, Y=0%, K=100%; and
b) C=70%, M=70%, Y=80%, K=85

may assume the same Lab values (such as L=10, a=0, b=0).

When transforming an image file that was prepared for one printing device to a file to be printed on a second printing device the following transformation, as defined by the two profiles (Equations 1A and 1B), takes place:

$$C_1 M_1 Y_1 K_1 \rightarrow Lab \qquad (1A)$$

$$Lab \rightarrow C_2 M_2 Y_2 K_2 \qquad (1B)$$

$C_1 M_1 Y_1 K_1 \rightarrow Lab$ represents the profile of the first printing device and
$Lab \rightarrow C_2 M_2 Y_2 K_2$ represents the profile of the second printing device.

The resultant $C_2 M_2 Y_2 K_2$ values for the second printing device is not related to the original $C_1 M_1 Y_1 K_1$ values except for producing generally the same color. As a result, the transformation may induce dramatic changes in the ink combination. For example, the original ink combination $C_1$=0%, $M_1$=0%, $Y_1$=0%, $K_1$=100% that generates a color having a Lab values of L=10, a=0, b=0 (for example) may result in an ink combination of: $C_2$=70%, $M_2$=60%, $Y_2$=60%, $K_2$=45%, that also generates (in this example) the color having same Lab values of: L=10, a=0, b=0.

When the image contains black text printed in the form of single ink K=100% (C=0%, M=0% and Y=0%), the transformation (Eq. 1) will change it to a four-ink printed text. Effects such as misregistration in the printing process deteriorate the quality of a four-ink text due to color contour at the text edges.

Also, when printing the image on a digital printer (or proofer), anti-alliasing algorithms are occasionally used. These algorithms smoothen the edge of such text, generating a gray scale boundary. When transforming these single ink gray scales to four-ink gray scales, as described above, a reduction in text quality is apparent.

Graphic image elements of a single ink, particularly detailed elements (such as a grid) are drastically deteriorated due to the transfer to four-inks elements by the transformation.

## SUMMARY OF THE INVENTION

It is the objective of the present invention to provide a method for color transformation of a digital image, whereas the transformation mode is also a function of the of the ink composition of the colors.

In particular, it is the objective of the present invention to enable the execution of such multi mode transformation using a single color transformation table.

It is yet another objective of the present invention to provide a method and tools to generate and edit the special modes of the transformation.

In another embodiment of the invention, the range of colors assuming different color transformations is larger then a single point. It may also comprise any of multi-point, lines or volumes in the 4D (CMYK) and 3D (Lab) color spaces.

In yet another embodiment, these special modes embedded in the LUT can be modified by the user to suit his special needs.

There is therefore provided, in accordance with a preferred embodiment of the present invention, a method for the generation of a color transformation to transform a first image having a first set of ink values to a second image having a second set of ink values. The first set of ink values and the second set of ink values generally have the same set of color values. The method includes:

a first transformation step from the first set of ink values to a set of vector values; and
a second transformation step from the set of vector values to a second set of ink values,
wherein at least two different ink values of the second set of ink values generally have the same color values.

Moreover, in accordance with a preferred embodiment of the present invention, the first and the second transformation steps are combined into a single transformation step from the first set of ink values to the second set of ink values.

Furthermore, in accordance with a preferred embodiment of the present invention, the single transformation step transforms at least part of a digital image.

Moreover, in accordance with a preferred embodiment of the present invention, at least part of a digital image is transformed by the first and the second transformation steps.

Furthermore, in accordance with a preferred embodiment of the present invention, the first set of ink values and the second set of ink values are ink values for the four colors of Cyan, Magenta, Yellow, Black (CMYK). The set of vector values are color space values.

In addition, in accordance with a preferred embodiment of the present invention, the first transformation step includes assigning color space values not associated with the color values of the at least part of a digital image. At least one dimension of the set of vector space values is a function of at least one dimension of the first set of ink values.

Alternatively the first transformation step includes assigning ink values not associated with the at least part of a digital image to the first set of ink values, At least one dimension of the second set of ink values is a function of at least one dimension of the vector space values or alternatively, at least one dimension of the second set of ink values is a function of at least one dimension of the first set of ink values.

## BRIEF DESCRIPTION OF THE DRAWINGS

The invention will be described hereinafter by way of example with reference to the accompanying drawings, wherein:

Figure 1 is a schematic drawing that generally describes the color space of a CMYK digital image in the context of a CMYK → Lab ICC Profile; and
Figure 2 is a schematic drawing that describes, schematically, the Lab color space of a normal digital image in context of an Lab → CMYK ICC Profile.

## DETAILED DESCRIPTION OF THE INVENTION

The description hereinbelow refers to ICC Profiles and 8 bit digital systems by way of example only without in any way limiting the scope of the invention.

## Description of Terms

CMYK units are specified in terms of % ink coverage, for example: C=10%.

Lab values are specified by numbers, as commonly used in color science, in CIE scale, for example: $0 \leq L \leq 100$.

Values representing an 8 bit system are denoted by sv (system values) for example, 256sv.

The CMYK values are linearly related to the 8 bit system wherein 0% is generally associated with 256sv and 100% is generally associated with 0sv

In alternative systems, the % values may be associated with a reduced range of 8 bit values.

## General Description

The color transformation LUT that transforms the digital CMYK image to Lab values is constructed from four-address coordinates that represent the C, M, Y and K values. Each address refers to the resultant Lab value.

In CMYK digital color images, the image part is composed of typical combinations of ink values. For example, black ink, K, is always mixed with at least one of C, M, and Y. The C, M, or Y components are relatively high. Normally for K=1%, at least one of C, M and Y will be over 20% (in an 8 bit address LUT, 1% step is 256/100 of the 8 bit scale).

As a result, the CMYK $\rightarrow$ Lab values that actually participate in the transformation of the color image occupy only a limited volume of the address space. For example, the address point C=0%, M=0%, Y=0%, K=100% (L=10, a=0, b=0) is not used.

However, not all Lab values exist in an image. For example, since small and large L values are always associated with small a and b values, the color L=0, a=0, b=127 never exists in an image. These characteristics of the color spaces can be used to solve the problem of transforming a black ink text to a four-ink component text due to the following transformations, described above in Equations 1A and 1B that is :

$$C_1 M_1 Y_1 K_1 \rightarrow \text{Lab and Lab} \rightarrow C_2 M_2 Y_2 K_2.$$

Since the address C=0%, M=0%, Y=0%, K=100% is used only for the text, an out-of-color-space Lab value (L=0, a=0, b=127) can be associated with this address in the $C_1 M_1 Y_1 K_1 \rightarrow$ Lab LUT, without effecting the transformation of the image part.

Also, in the Lab $\rightarrow C_2 M_2 Y_2 K_2$ LUT, the address L=0, a=0, b=127 (which is not involved with the transformation of the image part) can be associated with C=0%, M=0%, Y=0%, K=100% ink values.

By doing so, two parts of the digital color file that have the same color (Lab, as measured by a colorimeter) will assume different transformations, according to their ink composition.

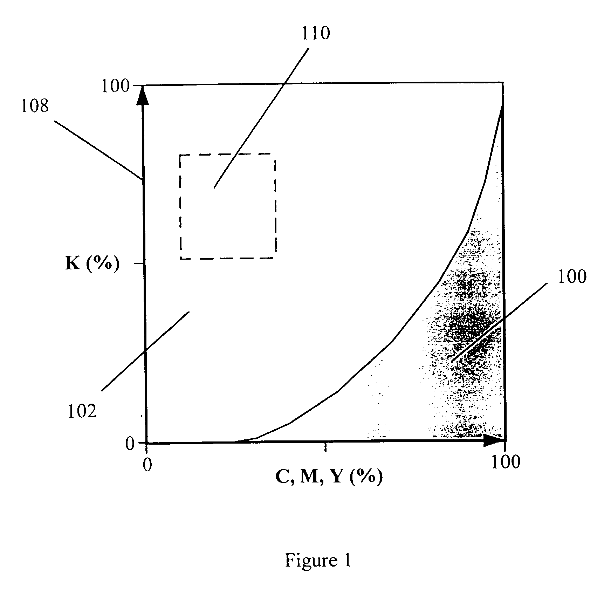

Reference is now made to Figure 1, which generally describes the color space of a CMYK digital image in the context of a CMYK $\rightarrow$ Lab ICC Profile.

The characteristics of 4D space (CMYK) is described in general form by using two 2D. diagrams. Figure 1 describes a typical range, illustrated by the shaded area labeled 100, of K values as a function of C, M and Y combinations that comprise the image. Range 100 is used to define a CMYK $\rightarrow$ Lab transformation such as defined by the ICC standard. The K values between 0 and 100% are illustrated by the axis 108.

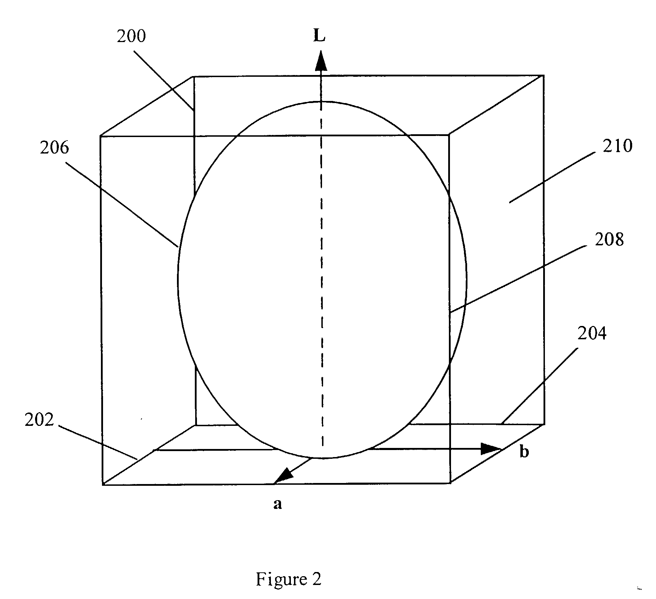

The non-shaded area 102 refers to a range of CMYK values which are not in the image range. Since this range of addresses is not required for the color transformation of a CMYK digital image, range 102 can be used to support another transformation such as required to handle black text. In the example of the preferred embodiment, only the range defined by the rectangle 110 is used, as will be discussed hereinbelow. Reference is now also made to Figure 2 which describes, schematically, the Lab color space of a normal digital image in context of an Lab $\rightarrow$ CMYK ICC Profile.

Axes 200, 202 and 204 represent the digital cube that provides all combinations of L, a and b available by the ICC standard. Referring now to the table below, the representation of the 8 bit system is as follows:

| L values | Axis #200 System Values | a or b Values | Axis #202 or #204 System Values |
|---|---|---|---|
| 0 | 0 | -128 | 0 |
| 100 | 255 | 127 | 255 |

where:

L values are positive ($0 \leq L \leq 100$); and Axis 200 represents the 8-bit system values (0-255) for L;
a and b values have values between -128 and 127; Axes 204 and 206 represents the 8-bit system values (0-255) for a and b,

This is the address space of the Profile.

Since the address space constitutes a cube, the maximum representable Chroma, $C^*_{ab}=(a^{*2}+b^{*2})^{1/2}$, is $(127^2+127^2)^{1/2} = 179.6$ at $h_{ab}$ angles of 45°, 135°, 225° and 315°.

In an article entitled: "The Gamut of Real Surface Colors", by M.R. Pointer published in COLOR Research and Application, Vol. 5, No. 3, Fall 1980 the Chroma, $C^+_{ab}$ of real surface colors, is in fact smaller then 120 overall and often smaller then 60 for $h_{ab}$ angles having a range between 200° to 260°. Thus, the volume occupied by the colors of real surfaces is considerably smaller then the address volume of the ICC Profile specifications.

Volume 208 (having a generally oval shape) schematically represents the range of Lab values of real surface colors, which encloses the range of Lab values that are actually used by the image when being transformed from Lab to CMYK.

Volume 210, refers to the volume between the walls of the digital cube excluding volume 206. This range of addresses can be used to assign special CMYK values to Lab values that do not exist in the image.

In the following embodiment of the invention, an image intended to be printed on a first printing device (hereinafter referred to as "pd1")contains a full range of gray scale comprising only black ink (K). This is a typical graphic element that is generated digitally and is used for line art elements (including text). The image also contains gray colors of four-ink compositions such as the images normally generated by scanning a color film.

It is desired to print the image on a second printing device (hereinafter referred to as "pd2").

Using the Profile: $C_1M_1Y_1K_1 \rightarrow$ Lab to represent printing device pd1 and Profile:

Lab $\rightarrow C_2M_2Y_2K_2$ to represent printing device pd2, the desired transformation may be constructed for the four-ink part of the image, using. Equations 1A and 1B above, as follows:

$$C_1M_1Y_1K_1 \rightarrow \text{Lab and Lab} \rightarrow C_2M_2Y_2K_2$$

However, if the Profiles are built in the conventional way, the single ink gray scale will assume four-ink values after the transformation. As explained in the hereinabove, measurement of grays containing single ink component, K, provide the same Lab values as grays containing four-ink components, which is generally undesirable.

It is a feature of the present invention to to change both Profiles correpondingly so that grays containing a single ink component, K, provide are associated Lab values from grays containing four-ink components.

Reference is made to Figure 1, representing Profile$_1$, $C_1M_1Y_1K_1 \rightarrow$ Lab.

In this case, the axis of the addresses $0\% \leq K_1 \leq 100\%$ and $C_1$, $M_1$, $Y_1$ all equal 0% (108 of Figure 1) is not participating in the transformation of the normal image (since they are out of range of image ink combinations), the Lab values associated with that axis may be changed without effecting the transformation of the normal part of the image.

Special Lab values are assigned to this axis 108 which are outside the range 206 (Figure 2). For example, axis 108 of Figure 1 can be mapped to axis 208 of Figure 2, that is the axis of $0 \leq L \leq 100$, a=b=127,

Figure 2 represents Profile$_2$, Lab $\rightarrow C_2M_2Y_2K_2$. Since axis 208 is not participating in the transformation of the normal image, the $C_2M_2Y_2K_2$ values associated with that axis may be changed without effecting the transformation of the normal part of the image.

It will be appreciated that the inventions is not limited to a four-ink set system.

Editing of Equations 1A and 1B may assume any of the following forms:

a. The Profile$_1$ is controlled through the function $L= f(K_1)$

$$[C_1=0, M_1=0, Y_1=0, K_1] \rightarrow [L= f(K_1), a=127, b=127] \tag{2A}$$

$$(L, a=127, b=127) \rightarrow (C_2=0, M_2=0, Y_2=0, K_2=L) \tag{2B}$$

b. The Profile$_1$ is controlled through the function $K_2=f(L)$ Equations 3A and 3B,

$$(C_1=0, M_1=0, Y_1=0, K_1) \rightarrow (L=K_1, a=127, b=127) \qquad\qquad 3A$$

$$[L, a=127, b=127] \rightarrow [C_2=0, M_2=0, Y_2=0, K_2=f(L)] \qquad\qquad 3B$$

c. The combination of Profile$_1$ and Profile$_2$ (Profile$_{12}$) are controlled through the function $K_2 = f(K_1)$ Equation 4.

$$[C_1=0, M_1=0, Y_1=0, K_1] \rightarrow [C_2=0, M_2=0, Y_2=0, K_2=f(K_1)] \qquad\qquad (4)$$

It should be noted that Profile$_{12}$ (Equation 4) is a direct transformation, that is, an ICC Device Link Profile. In this embodiment the function "f" may be edited using tools such as Gradation and Dot Gain which are known in the art. Any other suitable function may be used to satisfy specific requirements.

It will be appreciated by those skilled in the art that other sections of the digital color image may be treated with a special mode. For example, the $C_1M_1Y_1K_1$ values of the address volume 110 of Figure 1 may assume a different mode of color transformations. Furthermore, multiple set of address sets that are out of the normal range 100 may be used with associated multiple color transformation modes.

Although the description refers to the example of ICC Profiles, it will be appreciated that it can be implemented in many other color transformations of digital images.

It will be appreciated by persons skilled in the art that the present invention is not limited by what has been particularly shown and described herein above. Rather the scope of the invention is defined by the claims that follow:

## Claims

1.   A method for the generation of a color transformation to transform a first image having a first set of ink values to a second image having a second set of ink values, said first set of ink values and said second set of ink values generally having the same set of color values, the method comprising:

> a first transformation step from said first set of ink values to a set of vector values; and
> a second transformation step from said set of vector values to a second set of ink values,
> wherein at least two different ink values of said second set of ink values generally have the same color values.

2.   The method according to claim 1 wherein said first and said second transformation steps are combined into a single transformation step from said first set of ink values to said second set of ink values.

3.   The method according to claim 2 wherein said single transformation step transforms at least part of a digital image.

4.   The method according to claim 1 wherein at least part of a digital image is transformed by said first and said second transformation steps.

5.   The method according to claim 1 wherein said first set of ink values and said second set of ink values are ink values for the four colors of Cyan, Magenta, Yellow, Black (CMYK).

6.   The method according to claim 1 wherein said set of vector values are color space values.

7.   The method according to claim 4 wherein said first transformation step comprises assigning color space values not associated with the color values of said at least part of a digital image.

8.   The method according to claim 1 wherein at least one dimension of said set of vector space values is a function of at least one dimension of said first set of ink values.

9.   The method according to claim 4 wherein said first transformation step comprises assigning ink values not associated with said at least part of a digital image to said first set of ink values.

10.   The method according to claim 1 wherein at least one dimension of said second set of ink values is a function of at least one dimension of said vector space values.

11. The method according to claim 1 wherein at least one dimension of said second set of ink values is a function of at least one dimension of said first set of ink values.

Figure 1

Figure 2